# DEMANDE DE BREVET EUROPEEN

(11) **EP 2 423 912 A1**
(43) Date de publication de la demande: **29.02.2012**
(21) Numéro de dépôt: 11177623.3
(22) Date de dépôt: 16.08.2011
(51) Int. Cl.: G09G 5/00, G01C 23/00, H04L 7/033

(54) **Système d'émission et de réception de signaux numériques vidéo pour liaisons de type "LVDS"**

(30) Priorité: 24.08.2010 FR 1003435
(71) Demandeur: Thales, 92200 Neuilly Sur Seine (FR)
(72) Inventeur: Sontag, Yves, 33200 BORDEAUX (FR); Guffroy, Michael, 33127 MARTIGNAS SUR JALLES (FR)
(74) Mandataire: Bréda, Jean-Marc

(57) **Abrégé**

Le domaine général de l'invention est celui des systèmes d'émission et de réception de signaux d'images numériques vidéo pour liaisons de type « LVDS », un système comprenant un module d'émission, une liaison de transmission et un module de réception. Le signal vidéo « RGB » comprend les signaux de couleur et de synchronisation et un signal d'horloge. Le signal vidéo « LVDS» transmis par la liaison de transmission comprend plusieurs signaux primaires, le premier signal primaire dédié au signal d'horloge, le second signal primaire comprenant les informations de synchronisation, les autres signaux primaires comportant uniquement les informations de codage couleur. Le module d'émission « LVDS » a pour fonction de coder le signal vidéo « RGB » en signal vidéo « LVDS » et le module de réception de décoder le signal « LVDS » en signal « RGB ». Le système comporte les dispositions particulières suivantes :
le système d'émission comporte un moyen permettant d'incruster un motif graphique de reconnaissance dans le signal vidéo « RGB » ;
les moyens de réception fonctionnent en suréchantillonnage et comprennent des moyens de tests aptes à identifier les informations de synchronisation et le motif graphique de reconnaissance.

## Description

Le domaine de l'invention est celui des liaisons numériques de type « LVDS », acronyme signifiant « Low Voltage Differential Signaling ». L'invention concerne plus particulièrement le système d'émission et de réception des signaux émis ainsi que leur codage. L'invention peut s'appliquer à tous domaine utilisant des interfaces « LVDS » pour transmettre de l'information vidéo. Cependant, elle est destinée en priorité aux applications aéronautiques.

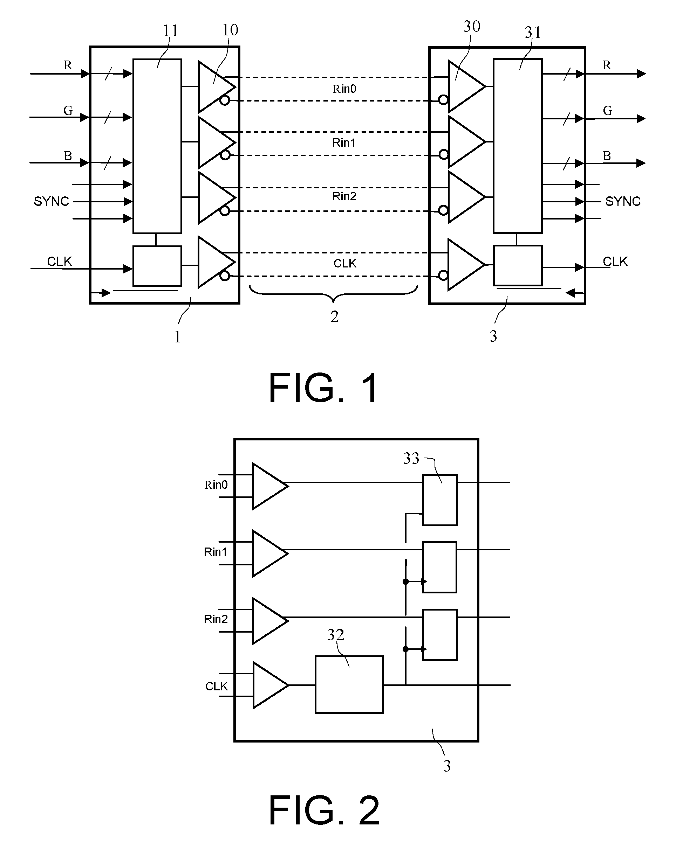

Ces liaisons sont généralement utilisées pour la transmission d'images et ont différentes appellations. Les plus courantes sont: "FPD-LINK", "Camera-Link", "Channel-Link", "FLATLINK", ....A titre d'exemple, la figure 1 représente un système de transmission complet de type « LVDS ». II comprend une interface de transmission 1, la ligne de transmission proprement dit 2 et une interface de réception 3. Typiquement, les interfaces de transmission 1 et de réception 3 comportent des moyens d'amplification 10 et 30 et des modules de codage 11 et 31. Dans le cas de la figure 1, le système est destiné à transmettre des signaux vidéo de type « RGB » codés sur 3 x 6 bits. La liaison 2 comporte 4 paires de fils torsadés disposés en parallèle. L'interface de transmission 1 code les signaux vidéo (R, G, B) et les informations de synchronisation SYNC et les envoie sur les trois premières paires de fils de liaison. Elle transmet également le signal d'horloge CLK sur la quatrième paire. A l'autre extrémité de la liaison 2, l'interface de réception 3 effectue le travail inverse et, à partir des signaux reçus, décode le signal vidéo. Si les informations vidéo sont codées sur 3 x 8 bits, alors la liaison 2 nécessite une cinquième paire de fils torsadés.

A l'origine, les liaisons « LVDS » ont été initialement développées pour des liaisons internes à un micro-ordinateur portable, du composant graphique vers l'écran plat et conviennent très bien à ce type d'application à faible distance. Ce type de liaison s'est considérablement développé et aujourd'hui leur coût est faible et un grand nombre de panneaux à cristaux liquides possèdent une interface « LVDS ». Aussi, de nombreux utilisateurs sont tentés de réaliser des liaisons non seulement intra-équipements mais aussi inter-équipements utilisant cette technologie. Dans le domaine aéronautique, il est possible de l'utiliser pour certains équipements avioniques, par exemple ceux assurant la fonction dite « Electronic Flight Bag » ou « EFB » destiné à remplacer les manuels et la documentation de bord. La norme ARINC 828 qui spécifie l'interface de ces équipements « EFB » autorise, entre autre, l'emploi des liaisons « LVDS ». Cet emploi est intéressant dans la mesure où les équipements basés sur une carte durcie d'ordinateur portable ont nativement une sortie vidéo « LVDS ».

Sur ce type de liaison « LVDS », l'horloge haute fréquence est reconstituée par des moyens de réception classiques à partir de l'horloge pixel et est utilisée directement pour échantillonner les voies appelées Rin0, Rin1 et Rin2 contenant les données vidéo comme indiqué sur la figure 2 où la boucle à verrouillage de phase 32 ou « PLL » signifiant « Phase Locked Loop » asservit les « bascules » 33. Ce principe d'échantillonnage est donc extrêmement sensible au déphasage entre les lignes que l'on appelle aussi « inter-pairs skew ». Dès que la longueur de la liaison dépasse quelques mètres, en fonction des caractéristiques du câble à paires multiples, des erreurs de transmission peuvent se produire dues du déphasage entre les différentes voies qui augmente avec la longueur. II est en effet nécessaire que le déphasage entre les voies reste nettement plus petit que la période « bit » de la transmission série « LVDS » qui vaut un septième de la période « pixel ».

A titre d'exemple, un format vidéo de type « XGA » transmettant des images comportant 1024 x 768 pixels au standard « SPWG », signifiant « Standard Panel Working Group » à la fréquence de rafraîchissement de 60Hz possède une fréquence « pixel » de 56 MHz. Sa fréquence de transmission série est 7 fois plus importante et vaut par conséquent 392 MHz. Une période « bit » ou « UI » pour « Unit Interval » a donc une durée d'environ 2,5ns. Par conséquent, l'addition de toutes les causes de déphasage dues, par exemple, aux composants séraliseur/désérialiseur dits « SERDES », aux longueurs de pistes des circuits imprimés, aux connecteurs et aux câbles ne doit pas amener une erreur globale supérieure à 1,25ns. Or, les meilleurs câbles à paires multiples, c'est à dire ceux qui sont spécifiés pour cet usage, ont une spécification de déphasage entre paires dit « inter pair skew » inférieure ou égale à 50ps/m, ce qui est déjà dramatique pour de grandes longueurs de câble de plusieurs dizaines de mètres. Pour les usages en environnements sévères comme ceux de l'avionique par exemple, il n'existe pas de tels câbles et le déphasage entre paires de câbles n'est pas maîtrisé avec les câbles aéronautiques disponibles.

Aussi, les moyens de réception standard des liaisons « LVDS » ne peuvent être utilisés raisonnablement en avionique que pour des liaisons courtes ou très courtes utilisant un harnais spécifique.

Pour résoudre les problèmes des liaisons « LVDS », la société « Silicon Image » a développé un nouveau standard appelé « TMDS » signifiant « Transition Minimized Differential Signaling » adopté pour les normes vidéo « DVI » et « HDMI ». Les données vidéo au format « TMDS » sont codées par un dispositif de codeur 8Bits-10Bits qui a pour effet de :
- Produire un code dit « DC balanced », c'est-à-dire comportant pratiquement autant de bits au niveau « 0 » que de bits au niveau « 1 ». Ce code permet de s'affranchir de la transmission de la composante continue et apporte une amélioration du diagramme de l'oeil ;
- Limiter la durée sans transition dite « run length », ce qui permet l'accrochage d'une boucle de phase analogique pour retrouver la phase bit sur chacune des voies indépendamment ;
- Procurer des caractères spéciaux qui permettent de retrouver la phase des mots notées « word boundaries » et permet la transmission des signaux de synchronisation vidéo tels que « Data Enable », « HSYNC », « VSYNC ».

Avec ce standard, la tolérance vis à vis du déphasage entre les voies n'est plus vraiment limitée par principe. Pour les composants dits « PanelLink® » ou « PanelBus^{™} » récents, la tolérance est d'une période d'horloge pixel, ce qui est largement suffisant. Malheureusement la liaison « TMDS » est totalement incompatible avec la liaison « LVDS », leurs interfaces respectives ne pouvant pas dialoguer entre elles. Ainsi on ne peut pas améliorer un système en remplaçant des liaisons « LVDS » par des liaisons « TMDS » sans rompre la compatibilité avec le matériel existant. Un autre inconvénient de la transmission « TMDS » est l'augmentation de la bande passante nécessaire. L'utilisation du codage 10B nécessite une vitesse de transmission de 650 Mbaud pour une image de type « XGA » au standard « VESA DMT » signifiant « Vidéo Electronics Standards Association Discrete Monitor Timing ». Dans le cas d'une transmission « LVDS », la vitesse nécessaire n'est que de 392 Mbaud pour le même format au standard « SPWG ». Donc un câblage prévu pour une transmission « LVDS » peut ne pas supporter une liaison « TMDS ».

Le système selon l'invention a pour objet d'apporter en réception, tout comme un récepteur « TMDS », une tolérance au déphasage entre les voies dit "inter pair skew » d'au moins une période pixel, ce qui est amplement suffisant pour la grande majorité des applications aéronautiques sans apporter de modifications majeures au standard de transmission « LVDS ». Ce système est constitué de trois fonctions principales permettant:
- la récupération de la phase bit (signal série) ;
- la récupération de la phase pixel (mot de transmission) sur la ligne dite « Rin2 » qui porte les informations de synchronisation vidéo ;
- la récupération de la phase pixel sur les deux autres voies, grâce, en particulier, au décodage d'un signal dit de « post-it » inséré à l'émission.

Plus précisément, l'invention a pour objet un système d'émission et de réception de signaux d'images numériques vidéo de type « RGB » pour liaisons de type « LVDS », un système comprenant au moins un module d'émission, une liaison de transmission et un module de réception,
le signal vidéo « RGB » comprenant trois signaux de couleur correspondant au codage couleur des pixels des images transmises, trois signaux de synchronisation et un signal d'horloge ;
le signal vidéo « LVDS » transmis par la liaison de transmission comprenant au moins quatre signaux primaires, chaque signal primaire étant transmis sur un câble de transmission qui lui est dédié, le premier signal primaire « CLK» dédié au signal d'horloge, le second signal primaire « Rin2 » comprenant les informations de synchronisation et au moins le troisième et le quatrième signal primaire « Rin0 » et « Rin1 » comportant uniquement les informations de codage couleur ;
le module d'émission « LVDS » ayant pour fonction de coder le signal vidéo « RGB » en signal vidéo « LVDS » et le module de réception de décoder le signal « LVDS » en signal « RGB »,
caractérisé en ce que :
le système d'émission comporte un moyen permettant d'incruster un motif graphique de reconnaissance dans le signal vidéo « RGB »
les moyens de réception fonctionnent en suréchantillonnage, c'est-à-dire à une fréquence d'échantillonnage qui est un multiple entier de la fréquence du signal d'horloge ;
les moyens de réception comprennent des moyens de tests aptes à identifier les informations de synchronisation dans le second signal primaire « LVDS » et le motif graphique de reconnaissance.

Avantageusement, lorsque les signaux de couleur sont codés sur 6 bits, la liaison de transmission comporte 4 câbles de transmission et en ce que, lorsque les signaux de couleur sont codés sur 8 bits, la liaison de transmission comporte 5 câbles de transmission.

Avantageusement, le motif graphique est du type « post-it », c'est-à-dire correspond à une portion d'image, est toujours situé au même emplacement de l'image vidéo et est toujours superposé à la portion d'image vidéo initiale qu'il remplace. II est possible de limiter sa hauteur à une ligne de l'image vidéo. Le motif est préférentiellement apériodique.

Avantageusement, la fréquence d'échantillonnage est égale à 5 fois la fréquence du signal d'horloge.

L'invention sera mieux comprise et d'autres avantages apparaîtront à la lecture de la description qui va suivre donnée à titre non limitatif et grâce aux figures annexées parmi lesquelles :
La figure 1 représente le principe général d'un système d'émission et de réception de signaux d'images numériques vidéo de type « RGB » pour liaisons de type « LVDS » ;
La figure 2 représente le synoptique général du moyen de réception de signaux lignes ou « LVDS » selon l'art antérieur ;
La figure 3 représente le contenu général des signaux lignes ou « LVDS » ;
La figure 4 représente le synoptique général du module de réception selon l'invention ;
La figure 5 représente le synoptique général d'un des circuits de suréchantillonnage des voies d'entrée du module de réception selon l'invention, nécessaire à la récupération du signal « bit » ;
La figure 6 représente le synoptique général des circuits de suréchantillonnage des voies d'entrée et du circuit de réalisation de l'horloge d'échantillonnage du module de réception selon l'invention ;
La figure 7 représente un exemple de la variation des valeurs du signal ligne « Rin2 » et de la détection de séquences caractéristiques dans ce signal ;
La figure 8 représente le synoptique général d'un des circuits d'identification du motif graphique selon l'invention, nécessaire à la récupération du signal « pixel».

Dans la suite de la description, on a adopté les définitions et la terminologie suivante :
Le signal vidéo, objet de la transmission, comprend :
   - trois signaux de couleur correspondant au codage couleur des pixels des images transmises. Ces pixels peuvent être codés soit sur 6 bits, soit sur 8 bits. Dans le premier cas d'un codage sur 6 bits, les bits correspondant aux pixels « rouges » sont notés de R0 à R5, les bits correspondant aux pixels « verts » sont notés de G0 à G5, les bits correspondant aux pixels « bleus » sont notés de B0 à B5,
   - trois signaux de synchronisation notés DE signifiant « Data Enable », VS signifiant « Vertical Synchro » et HS signifiant « Horizontal Synchro », ces trois signaux étant codés chacun sur un bit ;
   - un signal d'horloge ;

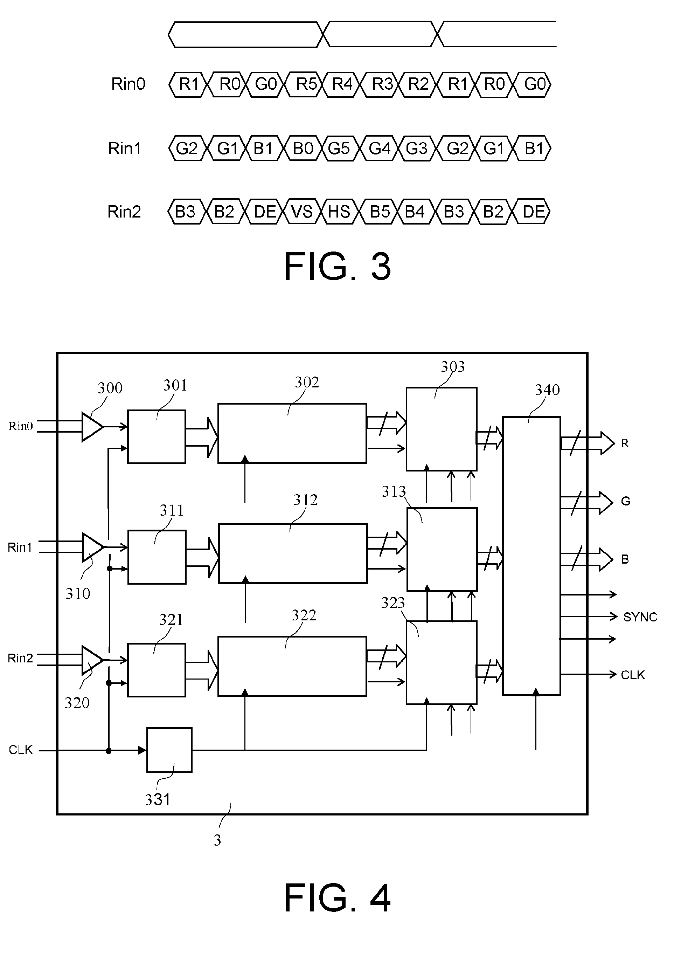

La liaison transmettant le signal vidéo « LVDS » comprend quatre signaux primaires lorsque le signal vidéo est codé sur 6 bits et 5 signaux primaires lorsque le signal est codé sur 8 bits, chaque signal primaire étant transmis sur un câble de transmission qui lui est dédié, chaque signal comprenant une succession de mots de 7 bits disposés en série. Cette liaison est représentée en figure 3 dans le cas de signaux vidéo codés sur 6 bits selon la norme « SPWG ». Les signaux « LVDS » sont alors organisés de la façon suivante :
- le premier signal primaire « CLK» dédié au signal d'horloge ;
- le second signal primaire « Rin2 » comprenant les informations de synchronisation DE, VS et HS ;
- le troisième et le quatrième signal primaire « Rin0 » et « Rin1 » comportant uniquement les informations de codage couleur.

Dans le cas de la figure 3, les bits correspondant au codage des signaux de couleur sont notés Ri, Gi et Bi, i variant de 0 à 5. Si le signal vidéo est codé sur 8 bits, un cinquième signal primaire porte les informations de couleur supplémentaires de poids plus faible.

La figure 4 représente le synoptique général du module de réception selon l'invention dans le cas où le signal vidéo est codé sur 6 bits. La liaison « LVDS » comporte donc 4 signaux primaires notés Rin0, Rin1, Rin2 et CLK. Les 3 signaux Rin0, Rin1 et Rin2 passent à travers trois chaînes électroniques sensiblement identiques. Chaque chaîne comprend essentiellement un étage d'amplification (modules 300, 310 et 320), un étage de désérialisation (modules 301, 311 et 321), un étage de récupération de la phase des « bits » élémentaires (modules 302, 312 et 322) et un étage de récupération de la phase des pixels élémentaires (modules 303, 313 et 323). L'ensemble des trois chaînes alimente un dernier module électronique 340 de stockage et de remise en forme des signaux décodés qui fournit en sortie les signaux R, G, B, les signaux de synchronisation et le signal d'horloge du signal vidéo initial.

Par souci de clarté, tout ce qui suit est relatif à un signal codé sur 6 bits transmis sur une liaison « LVDS » comportant 4 lignes de transmission mais peut facilement être transposé à un signal codé sur 8 bits transmis sur une liaison « LVDS » comportant 5 lignes de transmission.

Comme il a été dit, les différents signaux de la liaison « LVDS » peuvent se déphaser les uns par rapport aux autres. Il est donc essentiel de récupérer la phase des bits élémentaires composant les différents signaux dite phase « bit » sur chaque voie indépendamment.

Un circuit de récupération d'horloge classique à base de boucle de phase analogique ne peut pas être utilisé car les données vidéo ne sont pas codées. La durée sans transition encore appelée « run length » n'est pas bornée, le pire des cas correspondant à une image « noire ». Dans ce cas extrême, les voies Rin0 et Rin1 n'ont aucune activité. Ainsi, il est possible d'envisager des images telles que le « run-length » sur les voies Rin0 et Rin1 soit à peu près égal à la période image soit 16,7 ms par exemple, dans le cas d'une fréquence de rafraîchissement d'image de 60 images par seconde.

Pour résoudre ce problème, les moyens de réception fonctionnent en suréchantillonnage des voies d'entrées à une fréquence nettement supérieure à la fréquence horloge du signal vidéo. Ce principe est appliqué, soit pour des transmissions à basse vitesse, soit pour des applications particulières, comme les réceptions de signaux « SDI » signifiant « Serial Digital Interface » avec un circuit logique programmable de type « FPGA ».

On peut utiliser une fréquence d'échantillonnage égale à 5 fois la fréquence d'horloge. Le choix du rapport 5 est pratique car il donne une position centrale d'échantillonnage idéale et deux positions adjacentes acceptables pour la tolérance à la gigue haute fréquence ou « jitter ». Mais un autre choix n'est pas interdit.

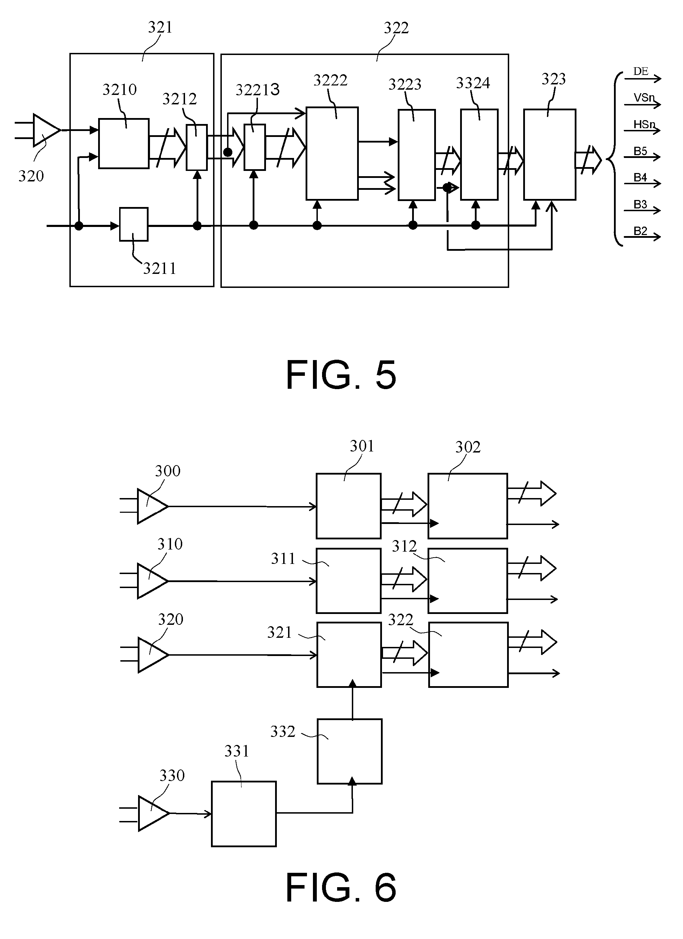

A titre d'exemple, la figure 5 représente le synoptique fonctionnel de la voie de réception Rin2 qui comporte les signaux de synchronisation DE, VS et HS. Ce dispositif comprend essentiellement deux modules 321 et 322. Un premier module 321 assure la fonction de désérialisateur du signal Rin2 qui est un signal série et le second module 322 assure la reconnaissance de la phase des bits. Plus précisément, ces sous-ensembles électroniques de la voie réception Rin2 comprennent :
- Un registre à décalage ou « shift register » 3210 permettant de suréchantillonner le flux de mots de 7 bits issus de la voie Rin2 à une fréquence 5 fois supérieure à la fréquence d'horloge et d'émettre des flux comprenant 20 échantillons ;
- Un premier et un second registre de stockage identiques 3212 et 3221 ;
- Des moyens d'indexation et de comparaison 3222 comprenant un pointeur électronique P qui est normalement indexé sur l'échantillon central de ces 5 échantillons. Les moyens d'indexation et de comparaison 3222 comprennent également des moyens de détection des changements d'état de ces échantillons. Pour réaliser cette fonction, on peut utiliser une batterie de portes logiques réalisant la fonction « OU exclusif », encore appelées XOR. On sait que la sortie d'une porte XOR est au niveau logique 1 que si une et une seule de ces deux entrées est au niveau logique 1. Par ce moyen, il est aisé de déterminer les changements d'état qui se traduiront, à la sortie des portes XOR, par des niveaux logiques « 1 » ;
- Un troisième registre de stockage 3223 sur 11 bits ;
- Un quatrième registre de stockage 3224 sur 7 bits ;
- Des fonctions de traitement classiques des signaux parallèle 323 comprenant des moyens classiques de détection des différents signaux en série composant le signal initial Rin2. A la sortie de ce circuit, on récupère sur 7 voies parallèles les différentes composantes du signal Rin2 dont les trois composantes de synchronisation DE, VSn et HSn. L'extraction des 7 composantes se fait au rythme de la fréquence pixel en valeur moyenne.

Dans les applications habituelles de type réception « SDI » de ce procédé de dé-sérialisation, on a 3, 4 ou 5 bits à échantillonner selon le glissement de fréquence entre la fréquence de la source et l'horloge d'échantillonnage. Aussi, le registre de 11 bits doit être géré de façon un peu particulière. Suivant le sens d'arrivée des données, le passage de changement de position du pointeur peut nécessiter un échantillonnage de 5 données pour ne pas en perdre une ou n'autoriser que 3 échantillons afin de ne pas en dupliquer une.

La détection de la phase des transitions se fait simplement par identification de la sortie des portes logiques réalisant la fonction logique « OU exclusif » sur 2 bits adjacents, un état 1 indiquant une transition. L'échantillonnage des données se fait avec 4 composants multiplexeurs appelés « MUX » 5 vers 1 plus une position fixe pour le cinquième échantillon. Suivant les informations du pointeur, on transfère 3, 4 ou 5 échantillons. Le registre suivant se remplit au fur et à mesure de l'arrivée des échantillons et possède 11 bits, 4 échantillons pouvant être reportés quand les 7 premiers sont extraits.

La capacité de fonctionner correctement pendant une durée de « run-length », c'est-à-dire la durée maximale d'un même état « 0 » ou « 1 », d'un tel dispositif dans son utilisation habituelle dépend de l'écart de fréquence entre la source et l'échantillonnage. A cause du glissement de fréquence, un rattrapage suffisamment fréquent de la phase d'échantillonnage est nécessaire, mais ce rattrapage ne peut être provoqué que par la présence d'une transition. Ainsi le « run-length » maximal autorisé est d'autant plus grand que le glissement de fréquence est petit. Dans notre application, avec un échantillonnage « mésochrone » de la source, le « run-length » est donc infini, le dispositif étant capable de dé-sérialiser un signal non codé.

Comme indiqué sur la figure 6, l'horloge d'échantillonnage est fabriquée en utilisant des boucles de phase 331 ou « PLL », signifiant « Phase Loop Locked », lesquelles peuvent apporter un déphasage sur l'horloge. On sait que, dans le pire des cas, le « run-length » peut être extrêmement long, le dispositif devenant alors sensible à des gigues à la fois haute fréquence, mais aussi basse fréquence, connu sous le nom de « wander ». On démontre qu'il n'en est rien à condition de paramétrer correctement les boucles de phase.

Les autres voies Rin0 et Rin1 ont le même schéma pour la partie électronique concernant la récupération de la phase bit.

La réalisation électronique des étages de désérialisation et de récupération de la phase des « bits » élémentaires ne pose pas de problèmes particuliers. A titre d'exemple, avec une fréquence d'émission maximale des pixels égale à 85 MHz, chaque pixel comportant 7 bits et chaque bit étant échantillonné sur 5 échantillons, les circuits logiques assurant le suréchantillonnage doivent fonctionner à une fréquence de 2975 MHz ou encore 2.975 Gbaud. Le circuit FPGA de marque « STRATIX » ou « ARIA GX » de la société ALTERA qui est utilisable jusqu'à 3 Gbaud sur ses entrées série convient parfaitement pour assurer cette fonction.

Comme il a été dit, il faut également récupérer la phase « pixel » sur les trois voies de réception. Les mots en sortie des registres de 7 bits des modules de reconnaissance de la phase peuvent comporter des données appartenant à deux pixels adjacents. On utilise alors, sur chaque voie, un dispositif de récupération de la frontière du mot parallèle encore appelé « word aligner using a barrel shifter », un « barrel shifter » désignant un registre dit « à barillet ». Celui-ci est constitué de registres parallèles et de 7 multiplexeurs 7 vers 1. Pour retrouver le bon multiplexage à effectuer, il faut être capable de reconnaître un message particulier dans le signal transmis.

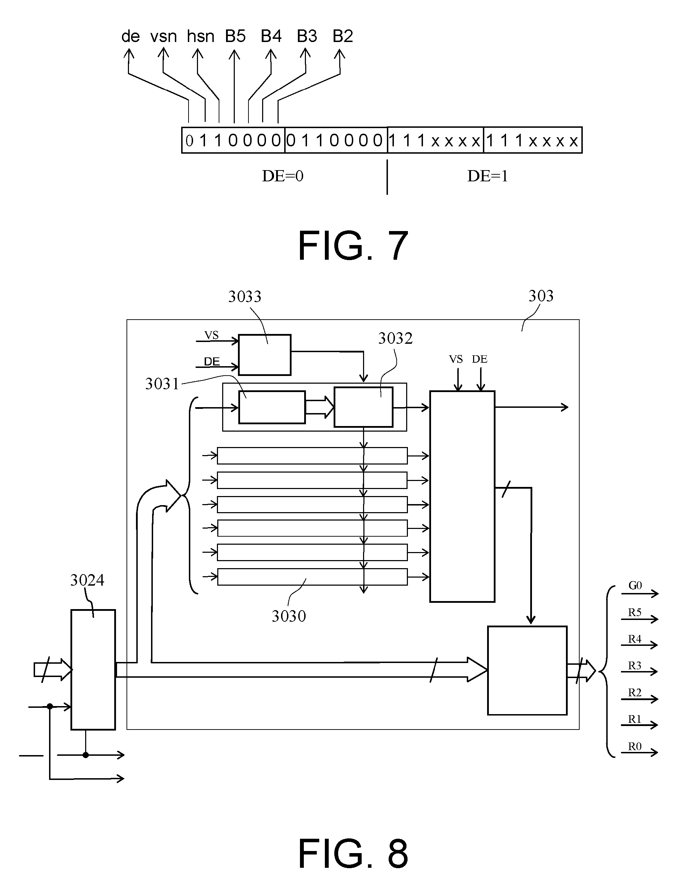

Comme on l'a vu sur la figure 3, la voie Rin2 possède les informations de synchronisation, c'est-à-dire les informations DE, VS et HS. Comme on le voit sur la figure 7 qui représente la succession des mots de 7 bits sur la voie Rin2, en dehors de la zone active vidéo, DE est égal à 0, ainsi que les bits RGB de vidéo, c'est-à-dire B5, B4, B3 et B2. La séquence de 10 bits notée « 0110000111 » et dont le « 0 » placé en première position et le « 1 » placé en huitième position correspondent au changement de la valeur de DE est donc caractéristique de cette transition à chaque début de ligne active et ne peut pas se retrouver à un autre moment. Pour les 7 phases possibles en réception, il suffit donc de faire le test de cette séquence encore appelée « word boundaries pattern ». Quand elle apparaît, la phase est identifiée et le multiplexeur du « barrel shifter » est alors positionné de façon que les mots de sortie commencent par DE.

La figure 3 permet de se rendre compte que, malheureusement, en ce qui concerne les voies Rin0 et Rin1, ainsi que la voie supplémentaire dans le cas d'un signal RGB codé sur 24 bits, il n'y a pas de possibilité de trouver une information de phase similaire. Aussi, il est nécessaire que, conjointement avec les ressources mises en oeuvre dans le module de réception, le dispositif selon l'invention soit associé avec une ressource incluse dans l'émetteur. Cette ressource associée peut être de type matériel ou « hardware »ou logiciel ou « software ».

Une solution matérielle est évidente. Il suffit de moduler d'une certaine façon les bits des voies Rin1 et Rin0 pendant la phase de transition d'images ou « blanking » quand la valeur de DE est à « 0 ». Malheureusement, cette solution est difficilement praticable car l'équipement émetteur est dans la quasi-totalité des cas un composant dit « COTS » signifiant « Component Of The Shelf » de type composant pour micro-ordinateur de type « PC » durci qu'il est très difficile de modifier matériellement. La sortie « LVDS » est la plupart du temps celle d'une puce graphique ne permettant pas la modification nécessaire.

Par conséquent la ressource associée doit être réalisable par logiciel, et elle ne peut consister qu'à modifier le contenu du signal vidéo de la façon la plus simple et la moins perturbatrice possible.

Un premier mode de réalisation consiste à réaliser une petite opération de tatouage sur l'image, opération connue sous le nom de « watermarking » logée dans un coin de l'image, en haut à gauche par exemple. Le tatouage est de faible intensité en utilisant les bits de poids faible ou « LSB » des pixels de l'image. On peut, par exemple, utiliser les bits de couleur G0 et B0. Ce tatouage n'est pas visuellement perceptible, compte-tenu de son emplacement et de son faible impact visuel. Mais ce type de fonction n'est pas facilement réalisable a priori avec un logiciel applicatif dans le cas d'un équipement basé sur une carte de micro-ordinateur de type PC.

Un second mode de réalisation consiste à introduire un motif graphique de reconnaissance de type « post-it ». Dans ce cas, il est nécessaire que le motif graphique se superpose sur l'image à n'importe quelle application exécutée par l'équipement émetteur. C'est à dire qu'il faut générer une « parcelle » d'image qui remplace toujours l'image vidéo d'origine. La méthode permettant de générer ce motif est voisine de celle du petit logiciel appelé « post-it » ayant le paramètre "always on top" activé. Dans notre application, la différence majeure par rapport au logiciel « post-it » est que l'emplacement de cette fraction d'image doit être absolument fixe et impossible à bouger. La hauteur du motif peut n'être que d'une ligne, de préférence à gauche sur la ligne supérieure de l'écran.

La synchronisation des voies Rin1 et Rin0 est basée sur la reconnaissance de ce motif graphique. Bien entendu la détection est validée dans une fenêtre temporelle par rapport aux informations de synchronisation qui ont été extraites de la voie Rin2. Ceci évite le risque d'une détection parasite liée à un contenu d'image particulier dans lequel on retrouverait, par hasard, le motif graphique.

Le motif de reconnaissance doit remplir les deux conditions suivantes :
- Le motif ne doit pas se recréer par simple décalage de pixels, c'est à dire qu'il ne doit pas comporter de périodicités, autrement dit, le motif doit posséder une forte auto-corrélation ;
- Le motif doit comporter suffisamment de pixels pour que la probabilité de confusion avec une autre portion d'image soit très faible. Pour sécuriser la détection, la présence du motif est validée dans une fenêtre temporelle de durée déterminée. Si le déphasage accepté est de plusieurs pixels, la fenêtre doit être de durée suffisamment plus longue que le motif, et dans ce cas il est préférable de travailler avec un motif assez long.

Le motif est constitué d'un certain nombre de mots de 7 bits. Si le motif comporte un grand nombre de mots, le motif peut être détectable par la reconnaissance d'un seul bit par mot. Dans ce cas, il devient possible de détecter uniquement la séquence particulière associée à un bit donné. Cela simplifie la quantité de registres nécessaires et la taille de la logique combinatoire si le motif est très long, car dans ce cas la quantité de bits est surabondante.

La figure 8 donne un exemple de réalisation d'un étage de récupération de la phase des pixels élémentaires basé sur l'identification du motif de reconnaissance. Cet étage correspond à celui mis en place sur la voie Rin0, Bien entendu, l'étage d'amplification est identique sur la voie Rin1. Une des fonctions de cet étage est de rechercher sur chacun des bits la séquence recherchée ou « pattern » qui correspond à un bit donné au moyen d'un ensemble de modules de reconnaissance 3030 comprenant chacun un registre à décalage 3031 et un module de détection de motif 3032. Comme il a été dit, la détection se fait uniquement dans une fenêtre temporelle contrôlée par le module 3033. Dans cette réalisation, pour un motif assez long, comme la tolérance de phase peut être de plus d'un pixel, il faut ajouter dans la fonction « barrel shifter » quelques registres 7 bits pour avancer ou reculer la phase du mot par rapport au signal DE issu de la voie Rin2. Ce changement de phase est contrôlé par la durée s'écoulant entre le signal DE et la détection du pattern.

Pour un motif plus court on peut utiliser un schéma plus habituel, tel celui utilisé pour l'alignement octet d'un signal série, encore appelé « byte boundaries alignement ».

L'effet visuel du motif de reconnaissance est très limité car restreint à la ligne supérieure de l'image. Si l'utilisateur est averti de sa présence, il n'y a pas nécessairement lieu d'essayer de transformer le motif en bruit par l'intermédiaire d'un transcodage pseudo-aléatoire encore appelé « scrambling » par exemple. Au contraire, il peut être souhaitable que le motif soit bien reconnaissable sans ambiguïté, donc d'une certaine longueur. Il est même possible d'utiliser des motifs s'étendant sur plusieurs lignes.

Il est très souhaitable que le récepteur soit capable de fonctionner même avec une source n'ayant pas plaqué le motif adéquat. Cela peut par exemple permettre l'utilisation du récepteur sur des moyens standard avec un câble de courte longueur. Aussi, quand on ne trouve pas de façon régulière le message sur aucun des bits des voies Rin0 et Rin1, on peut après confirmation conclure que la source ne l'émet pas. Dans ce cas, l'interface de réception se configure automatiquement dans un mode similaire à celui d'un récepteur « LVDS » ordinaire, avec une tolérance au « skew » ordinaire et inférieure à la période bit. Dans ce mode « sans motif », les voies Rin0 et Rin1 sont directement asservies en phase sur la voie Rin2 en faisant l'hypothèse que le déphasage est inférieur à une période bit. Il suffit pour cela de positionner les modules « barrel shifter » des voies Rin0 et Rin1 par référence à la voie Rin2. Dans ce mode, les blocs de désérialisation notés « SERDES » et les modules « BitSampler » doivent être scrupuleusement initialisés de façon identique. On peut noter que la phase de la voie d'horloge Clk n'a absolument aucune importance, c'est uniquement le déphasage entre les voies Rin qui compte. Ainsi, par rapport à des circuits « LVDS » normaux, dans le mode « sans motif superposé », on évite les erreurs de phase qui peuvent résulter de la différence structurelle entre la transmission de l'horloge et la transmission des voies. A l'émission comme en réception, les voies Rin sont traitées de la même façon, donc les déphasages liés aux circuits intégrés seront minimisés.

Les avantages du système d'émission selon l'invention sont les suivants :
- Avec un récepteur doté du dispositif constituant l'invention, la transmission « LVDS » sur plusieurs paires de lignes est insensible au déphasage entre les voies dite « inter pair skew » ;
- La tolérance vis à vis du "skew" permet de rajouter des circuits d'égalisation pour compenser les pertes haute fréquence du câble, ce qui permet la transmission sur de plus grandes longueurs ;
- Le récepteur reste compatible d'une source sans motif ajouté, avec des performances standard.

Les inconvénients du dispositif sont modérés. Il s'agit essentiellement :
- De mettre en oeuvre des circuits électroniques aptes à fonctionner à une fréquence 5 fois supérieure au débit de transmission de façon à suréchantillonner les signaux. On a vu que la mise en oeuvre de tels composants ne posent pas de problèmes particuliers ;
- D'ajouter un motif superposé à l'image source, ce motif ayant un impact faible tant du point de vue de sa mise en oeuvre que de son aspect visuel.

## Revendications

1. Système d'émission et de réception de signaux d'images numériques vidéo de type « RGB » pour liaisons de type « LVDS », un système comprenant au moins un module d'émission (1), une liaison de transmission (2) et un module de réception (3) ;
le signal vidéo « RGB » comprenant trois signaux de couleur (R, G, B) correspondant au codage couleur des pixels des images transmises, trois signaux de synchronisation (SYNC) et un signal d'horloge (CLK) ;
le signal vidéo « LVDS» transmis par la liaison de transmission comprenant au moins quatre signaux primaires (Rin0, Rin1, Rin2, CLK), chaque signal primaire étant transmis sur un câble de transmission qui lui est dédié, le premier signal primaire « LVDS» dédié au signal d'horloge, le second signal primaire « LVDS » comprenant les informations de synchronisation et au moins le troisième et le quatrième signal primaire « LVDS » comportant uniquement les informations de codage couleur ;
le module d'émission « LVDS » ayant pour fonction de coder le signal vidéo « RGB » en signal vidéo « LVDS » et le module de réception de décoder le signal « ligne » en signal « RGB » ;
**caractérisé en ce que** :
le système d'émission comporte un moyen permettant d'incruster un motif graphique de reconnaissance dans le signal vidéo « RGB » ;
les moyens de réception fonctionnent en suréchantillonnage, c'est-à-dire à une fréquence d'échantillonnage qui est un multiple entier de la fréquence du signal d'horloge ;
les moyens de réception comprennent des moyens de tests (301, 302, 311, 312, 321, 322) aptes à identifier les informations de synchronisation dans le second signal primaire « LVDS » et le motif graphique de reconnaissance.

2. Système d'émission et de réception de signaux d'images numériques vidéo selon la revendication 1, **caractérisé en ce que**, lorsque les signaux de couleur sont codés sur 6 bits, la liaison de transmission comporte 4 câbles de transmission et **en ce que**, lorsque les signaux de couleur sont codés sur 8 bits, la liaison de transmission comporte 5 câbles de transmission.

3. Système d'émission et de réception de signaux d'images numériques vidéo selon la revendication 1, **caractérisé en ce que** le motif graphique est du type « post-it », c'est-à-dire correspond à une portion d'image, est toujours situé au même emplacement de l'image vidéo et est toujours superposé à la portion d'image vidéo initiale qu'il remplace.

4. Système d'émission et de réception de signaux d'images numériques vidéo selon la revendication 3, **caractérisé en ce que** le motif graphique a une hauteur limitée à une ligne.

5. Système d'émission et de réception de signaux d'images numériques vidéo selon la revendication 3, **caractérisé en ce que** le motif graphique est apériodique.

6. Système d'émission et de réception de signaux d'images numériques vidéo selon la revendication 1, **caractérisé en ce que** la fréquence d'échantillonnage est égale à 5 fois la fréquence du signal d'horloge.
